# EUROPEAN PATENT APPLICATION

(11) **EP 3 910 002 A1**
(43) Date of publication of application: **17.11.2021**
(21) Application number: 19908545.7
(22) Date of filing: 12.12.2019
(51) Int. Cl.: C08G 65/40

(54) **METHOD FOR CONTINUOUSLY PRODUCING AROMATIC POLYETHER**

(30) Priority: 08.01.2019 JP 2019000985
(71) Applicant: Kureha Corporation, Chuo-ku Tokyo 103-8552 (JP)
(72) Inventor: KURIU, Toshiyuki, Tokyo 103-8552 (JP); SUZUKI, Tasutaka, Tokyo 103-8552 (JP)
(74) Representative: Hoefer & Partner Patentanwälte mbB
(86) International application number: PCT/JP2019/048645
(87) International publication number: WO 2020/145017

(57) **Abstract**

A method for continuously producing an aromatic polyether according to the present invention includes simultaneously implementing: a supply step of supplying a polymerization solvent, an alkali metal compound, and a raw material; a polymerizing step; and a movement step. The alkali metal compound is supplied as an aqueous mixture. According to the present invention, clogging of piping in the continuous production apparatus can be suppressed, and the aromatic polyether can be stably obtained.

## Description

### TECHNICAL FIELD

The present invention relates to a method for continuously producing an aromatic polyether.

### BACKGROUND ART

Aromatic polymers such as polyphenylsulfone (PPSU), polysulfone (PSU), polyethersulfone (PES), polyether ether ketone (PEEK), polyether nitrile (PEN), and polyether imide (PEI) excel in heat resistance, chemical resistance, flame retardancy, mechanical strength, electrical characteristics, and dimensional stability. These aromatic polymers can be molded into various molded products, films, sheets, and fibers, etc. through ordinary melt processing methods such as extrusion molding, injection molding, and compression molding, and therefore are commonly used in a wide variety of technical fields including electric devices, electronic devices, automobile instruments, and packaging materials.

As a method of polymerizing an aromatic polyether ketone (PAEK) such as PEEK, the polymerization method described in Patent Document 1, for example, is known as a typical technique. Patent Document 1 describes a method for producing PAEK through a nucleophilic substitution reaction using an aromatic dihalide component, an aromatic dihydroxy component, an alkali metal carbonate or bicarbonate, and a solvent.

### Citation List

### Patent Document

Patent Document 1: JP 61-10486 B

### SUMMARY OF INVENTION

### Technical Problem

Polymers are generally produced through a batch process or a continuous process. For example, from the perspectives of a quantitative determination and a liquid feeding, when production is carried out using a continuous process, the raw materials and the like are supplied into a continuous production apparatus in a liquid form.

However, in the polymerization of aromatic polyethers such as PAEK, typically, the polyethers have been produced using a batch process. In addition, in the polymerization of aromatic polyethers, when water is contained in the raw materials, a polymerization reaction through a nucleophilic substitution reaction is inhibited, and therefore it is desirable to not use water in the supply of the raw materials. Alternatively, it is desirable to dehydrate the raw materials as necessary, or to remove the water that is produced during the reaction.

Thus, when an attempt is made to produce a PAEK through a nucleophilic substitution reaction in a continuous manner, the raw materials must be supplied without using water. However, when an attempt is made to supply the raw materials without using water, the piping is easily clogged due to the alkali metal compound that does not dissolve in an organic solvent. As a result, handling properties such as conveyance become complicated, and raw materials cannot be supplied in a high concentration. This leads to concerns about a decrease in production efficiency of polymer.

Thus, an object of the present invention is to establish a production method through which clogging of piping in a continuous production apparatus is suppressed, and an aromatic polyether can be stably obtained.

### Solution to Problem

In order to solve the problems described above, a method for continuously producing an aromatic polyether according to the present invention includes:
simultaneously implementing
a supply step of supplying a polymerization solvent, an alkali metal compound, and a raw material into a continuous production apparatus in which a plurality of reaction vessels are sequentially connected,
a polymerizing step of forming a reaction mixture by carrying out a polymerization reaction in the polymerization solvent in at least one or more of the reaction vessels, and
a movement step of sequentially moving the reaction mixture to each reaction vessel; and
supplying the alkali metal compound as an aqueous mixture.

### ADVANTAGEOUS EFFECTS OF INVENTION

According to one aspect of the present invention, clogging of piping in the continuous production apparatus is suppressed, and an aromatic polyether can be stably obtained.

### DESCRIPTION OF EMBODIMENTS

### [Aromatic Polyether]

An aromatic polyether obtained by the method for continuously producing an aromatic polyether according to the present embodiment (hereinafter may be abbreviated simply as "continuous production method of the present embodiment") is an aromatic polymer in which at least an aromatic ring and an ether group are linked, and includes, in addition to such aromatic polymers, an aromatic polymer containing a sulfone group and/or ketone group, and the like, as well as a nitrile group or the like. The continuous production method of the present embodiment is suitable for the production of, amongst aromatic polyethers, polyaryletherketones (aromatic polyether ketones, PAEK), aromatic polysulfones (PASF), and aromatic polyether nitriles (PAEN). In the present specification, when the aromatic polyether has a plurality of groups selected from a sulfone group, a ketone group, and a nitrile group, the aromatic polyether is classified as an aromatic polymer of the group having a larger number of moles. Specifically, for a case in which the aromatic polyether has both a sulfone group and a ketone group, when the number of moles of the ketone group is greater than the number of moles of the sulfone group, the aromatic polyether is classified as a PAEK, and when the number of moles of the ketone group is less than the number of moles of the sulfone group, the aromatic polyether is classified as a PASF.

A PAEK obtained by the continuous production method of the present embodiment is not particularly limited, and has a structure made up of repeating units that include a divalent aromatic group (a residue obtained by removing two hydrogen atoms bonded to the aromatic ring from the aromatic compound), a carbonyl group and an ether group. Examples of the PAEK include polyether ether ketone (PEEK), polyether ketone (PEK), polyether ketone ketone (PEKK), polyether ether ketone ketone (PEEKK), and polyether ketone ether ketone ketone (PEKEKK).

A PASF obtained by the continuous production method of the present embodiment is typically a resin having repeating units that include a divalent aromatic group (a residue obtained by removing two hydrogen atoms bonded to the aromatic ring from the aromatic compound) and a sulfonyl group

(-SO₂-). Examples of the PASF include polysulfone (PSU), polyphenylsulfone (PPSU), and polyethersulfone (PES).

A PAEN obtained by the continuous production method of the present embodiment is typically a resin that has repeating units that include a divalent aromatic group having a cyano group bonded thereto (a residue obtained by removing two hydrogen atoms bonded to the aromatic ring from an aromatic compound to which a cyano group is bonded) and an ether group (-O-). Examples of the PAEN include polyether nitrile (PEN).

From perspectives of easily obtaining the effect of the present application and ease of production, the continuous production method of the present embodiment is particularly suitable for production of PAEK, PSU, PPSU, PES, and PAEN, which can be obtained by a polycondensation reaction accompanied by the production of byproducts, that is, a desalting polycondensation reaction.

The weight average molecular weight (Mw) of the aromatic polyether obtained by the continuous production method of the present embodiment is in a wide range. Typically, a lower limit of the weight average molecular weight of the aromatic polymer obtained through the present embodiment according to gel permeation chromatography (GPC) is at least 3000, preferably at least 5000, and more preferably at least 10000. Furthermore, the upper limit of the weight average molecular weight is not greater than 300000, and preferably not greater than 200000.

Here, the Mw is a polystyrene equivalent value, and the solvent, the column, the measurement temperature, and the like may be selected, as appropriate, according to the type of aromatic polyether of interest.

### (Measurement Method of Weight Average Molecular Weight)

### 1) Weight average molecular weight (Mw) of PAEK polymer

The weight average molecular weight is measured using GPC under the following conditions.
Solvent: 4-chlorophenol / 1,2-dichlorobenzene = 30/70 (wt.%), Temperature: 40°C,
Detector: RI detector,
Sample injection volume: 200 µL (concentration: 30 mg/10 mL),
Flow rate: 0.5 mL/min,
Standard polystyrene: Six types of standard polystyrenes of 1090000000, 427000, 96400, 37900, 17400, and 5560.

### 2) Weight average molecular weight (Mw) of PASF and PAEN

The weight average molecular weight is measured using GPC under the following conditions.
Solvent: LiBr 0.01 M/L NMP solution,
Temperature: 40°C,
Detector: RI detector,
Sample injection volume: 100 µL (concentration: 1 mg/1 mL),
Flow rate: 1.0 mL/min,
Standard polystyrene: Five types of standard polystyrene of 427000, 96400, 37900, 17400, and 5560.

### [Continuous Production Method]

With the continuous production method of the present embodiment, the following supply step, polymerizing step, and movement step are implemented simultaneously in a continuous production apparatus in which a plurality of reaction vessels are sequentially connected. The continuous production apparatus and each of the steps will be explained below.

Prior to the description of each step, the continuous production apparatus is described first. In the continuous production apparatus used in the continuous production method of the present embodiment, a plurality of reaction vessels are sequentially connected. From perspectives of resource savings, energy savings, and equipment cost reduction, the continuous production apparatus is preferably provided with a housing chamber that houses a plurality of reaction vessels, the reaction vessels are sequentially connected, and the reaction vessels communicate with each other through a gas phase in the housing chamber. Alternatively, as a modification, the continuous production apparatus is preferably one in which a plurality of independent reaction vessels are sequentially connected vertically downward, and the gas phase parts of the reaction vessels are communicated with each other through a ventilation unit. From perspective of easily obtaining a polymer with a high degree of polymerization, the number of reaction vessels is preferably three or more. In addition, from perspectives of the compactness of the continuous production apparatus and economic performance, the number of reaction vessels is preferably not greater than 30 and more preferably not greater than 20.

The preferred continuous production apparatus may be a continuous production apparatus having a configuration similar to that of a continuous production apparatus for a polyarylene sulfide disclosed in, for example, WO 2017/179327 and WO 2018/159220. In the preferred continuous production apparatus, the gas phase parts of the plurality of reaction vessels are in mutual communication, and therefore the pressure in each of the gas phase parts is uniform. Thus, water can be removed from any of the plurality of reaction vessels through a water removing unit connected to the continuous production apparatus, and therefore the amount of water in the reaction mixture decreases from the upstream side to the downstream side in the movement direction of the reaction mixture. As a result, reaction inhibition by water is suppressed, and the polymerization reaction is promoted. In addition, since the boiling point of the reaction mixture increases, polymerization at high temperatures is possible, and the polymerization reaction can be further promoted. Furthermore, through the above-described promotion of the polymerization reaction, the temperature of the reaction mixture is easily increased, and the polymerization reaction is more easily promoted.

### [Supply Step]

In the supply step, the polymerization solvent, the alkali metal compound, and the raw material are supplied into the continuous production apparatus described above.

### (Polymerization Solvent)

Examples of the polymerization solvent include N,N-dialkylformamides such as N,N-dimethylformamide (DMF), N,N-diethylformamide, and N,N-dipropylformamide; N,N-dialkylacetamides such as N,N-dimethylacetamide, N,N-diethylacetamide, and N,N-dipropylacetamide; N-alkyl-2-pyrrolidones such as N-methyl-2-pyrrolidone (NMP), N-ethyl-2-pyrrolidone, N-propyl-2-pyrrolidone, and N-cyclohexyl-2-pyrrolidone; N,N'-dialkylimidazolidinones such as N,N'-dimethylimidazolidinone, N,N'-diethylimidazolidinone, and N,N'-dipropylimidazolidinone; N-alkyl caprolactams such as N-methyl caprolactam, N-ethyl caprolactam, and N-propyl caprolactam; sulfones such as sulfolane(1,1-dioxothiolane), dimethyl sulfone, diethyl sulfone, diisopropyl sulfone, and diphenyl sulfone; sulfoxides such a dimethyl sulfoxide and diethyl sulfoxide; and mixed solvents selected from the group consisting of mixtures of these. The polymerization solvent is preferably a solvent in which each of the solvents or a mixture thereof is a liquid at room temperature.

Furthermore, a polymerization solvent selected from the group consisting of N-alkyl-2-pyrrolidone, N-alkylcaprolactam, N, N'-dialkylimidazolidinone, N-alkylcaprolactam, sulfone, and mixtures thereof is preferably used, a polymerization solvent selected from the group consisting of N-alkyl-2-pyrrolidone, sulfone, and mixtures thereof is more preferably used, and a polymerization solvent selected from the group consisting of sulfolane, N-ethyl-2-pyrrolidone, N-methyl-2-pyrrolidone, and mixtures thereof is even more preferably used.

### (Alkali Metal Compound)

The alkali metal compound may be any compound capable of converting the aromatic dihydroxy compound described below to an alkali metal salt. Here, examples of the alkali metal compound include carbonates, hydrogen carbonates, or hydroxides of lithium, sodium, potassium, rubidium, or cesium. The alkali metal compound is preferably a sodium or potassium compound, and a carbonate of an alkali metal is also preferable. Sodium carbonate and potassium carbonate are more preferable as the alkali metal compound. One type of these alkali metal compounds may be used alone, or two or more types thereof may be used in combination, as appropriate. The usage amount of the alkali metal compound is appropriately selected in a range from 1.01 to 2.5 equivalents per equivalent of the aromatic dihydroxy compound that is used. Note that for the aromatic dihydroxy compound and the alkali metal carbonate, one mole corresponds to two equivalents, and for the alkali metal hydrogen carbonate and the hydroxide, one mole corresponds to one equivalent.

In the continuous production method of the present embodiment, the alkali metal compound is supplied to the continuous production apparatus as an aqueous mixture, that is, as its mixture with water that exhibits fluidity. A water-insoluble raw material may be supplied as a mixture with the polymerization solvent into the continuous production apparatus separately from the aqueous mixture. The aqueous mixture may contain raw materials such as monomers described below. According to the known method, it was thought that when the alkali metal compound is supplied as an aqueous mixture, the reaction is inhibited due to water included in the polymerization system. However, the present inventors discovered that with the continuous production method using the continuous production apparatus described above, even if water is contained, polymerization proceeds without inhibition of the reaction. In addition, clogging of the piping in the continuous production apparatus and solidification of the raw materials or the like in the continuous production apparatus can be suppressed by supplying the alkali metal compound as an aqueous mixture. Furthermore, clogging of the piping can be further suppressed by supplying the aqueous mixture into the continuous production apparatus separately from a mixture of the polymerization solvent and a portion of the raw material that is water insoluble. Examples of the aqueous mixture include an aqueous slurry and an aqueous solution, and an aqueous solution is preferable.

### (Raw Material)

Examples of the raw materials include aromatic dihalogen compounds and aromatic dihydroxy compounds, which are monomers of aromatic polyethers.

In the continuous production method, the raw material is supplied in a liquid form, but from the perspectives of quantitative determination and liquid feeding, the raw material is preferably supplied into the continuous production apparatus in the form of a solution obtained by dissolving the raw material in the polymerization solvent. In the present specification, the term liquid refers to a solution, a dispersion, or a slurry. Furthermore, the term solution indicates a state in which the solid is dissolved in a solvent in a homogeneous state. The solvent may be an aqueous solvent such as water, an organic solvent, or a mixture thereof.

When the raw material is supplied in the form of a solution, if water is included in the solution of the polymerization solvent and the raw material, at least part of the raw material may be dehydrated and then supplied into the continuous production apparatus.

### <<Raw Materials for PAEK>>

When the aromatic polyether to be produced is PAEK, the PAEK can be produced using the raw materials described in, for example, JP 61-10486 B, JP 07-138360 A, WO 2003/050163, JP 2010-70657 A, and JP 2014-532109 T.

Examples of the aromatic dihalogen compound include, but are not limited to aromatic dihalide compounds (for example, dihalogenated benzophenones) having, per aromatic molecule, an aromatic ring, a ketone group (-CO-), and two halogen groups, such as, for example, 4,4'-difluorobenzophenone and 4,4'-dichlorobenzophenone.

Examples of the aromatic dihydroxy compound include 1,3-dihydroxybenzene (resorcin), 1,4-dihydroxybenzene (hydroquinone), 4,4'-dihydroxybiphenyl (4,4'-biphenol), 4,4'-dihydroxy-terphenyl, 2,6-dihydroxynaphthalene, 1,4-dihydroxynaphthalene, 4,4'-dihydroxydiphenyl ether, 4,4'-dihydroxydiphenylsulfone, 4,4'-dihydroxybenzophenone, and 4,4'-tetraphenyl-bisphenol, but the aromatic dihydroxy compound is not limited to these, and various diphenols such as bisphenol A, for example, can be used in addition to these.

In addition, a compound having, per molecule, an aromatic ring, a ketone group (-CO-), a halogen group, and a hydroxyl group can be subjected to the same polycondensation reaction. Examples of compounds that can be used in this reaction include compounds such as 4-hydroxy-4'-fluorobenzophenone and 4-hydroxy-4'-chlorobenzophenone.

When the aromatic polyether to be produced is PAEK, the aromatic dihalogen compound is preferably mixed with the polymerization solvent and supplied into the continuous production apparatus. Furthermore, the alkali metal compound and the aromatic dihydroxy compound are preferably mixed with water and supplied as an aqueous mixture such as an aqueous solution. This is because the activity of the aromatic dihydroxy compound for the polymerization reaction increases due to a neutralization reaction between the alkali metal compound and the aromatic dihydroxy compound. Thereby, the reaction of the aromatic dihydroxy compound with the aromatic dihalogen compound can be initiated quickly after fed into the continuous production apparatus, and a high molecular weight PAEK can be obtained. In addition, by mixing the alkali metal compound and the aromatic dihydroxy compound with water and supplying them as an aqueous mixture such as an aqueous solution, the alkali metal compound does not precipitate in clump forms in the continuous production apparatus, and the load on the continuous production apparatus can be suppressed.

### <<Raw Materials for PASF>>

When the aromatic polyether to be produced is PASF, the PASF can be produced using the raw materials described in JP 2013-159641 A, for example.

Examples of the aromatic dihalogen compound include aromatic dihalogenosulfone compounds such as bis(4-chlorophenyl)sulfone (also referred to as dichlorodiphenylsulfone) and 4,4'-bis(4-chlorophenylsulfonyl)biphenyl. The aromatic dihalogenosulfone compound may be a compound having an aromatic ring, a sulfonyl group (-SO₂-), and two halogen groups per molecule.

Examples of the aromatic dihydroxy compound include bis(4-hydroxyphenyl) sulfone, bis(4-hydroxy-3,5-dimethylphenyl) sulfone, and bis(4-hydroxy-3-phenylphenyl) sulfone, 2,2-bis(4-hydroxyphenyl) propane, 2,2-bis(4-hydroxyphenyl) hexafluoropropane, bis(4-hydroxyphenyl) sulfide, bis(4-hydroxy-3-methylphenyl) sulfide, bis(4-hydroxyphenyl) ether, hydroquinone, resorcin, catechol, phenylhydroquinone, 4,4'-dihydroxybiphenyl, 2,2'-dihydroxybiphenyl, 3,5,3',5'-tetramethyl-4,4'-dihydroxybiphenyl, 2,2'-diphenyl-4,4'-dihydroxybiphenyl, and 4,4'-dihydroxy-p-octaphenyl. The aromatic dihydroxy compound may be a compound having an aromatic ring and two hydroxyl groups per molecule. In the present embodiment, a compound having a halogeno group and a hydroxyl group per molecule, such as 4-hydroxy-4'-(4-chlorophenylsulfonyl) biphenyl, can be used in place of all or some of the aromatic dihalogen sulfone compound and the aromatic dihydroxy compound.

In addition, a compound having, per molecule, an aromatic ring, a sulfonyl group (-SO₂-), a halogen group, and a hydroxyl group can be subjected to the same polycondensation reaction. Examples of compounds that can be used in this reaction include compounds such as 4-(4-fluorobenzenesulfonyl) phenol and 4-(4-chlorobenzenesulfonyl) phenol.

### <<Raw Materials for PAEN>>

When the aromatic polyether to be produced is PAEN, the PAEN can be produced using the raw materials described in JP 07-138360 A, for example.

That is, the PAEN of the present invention is produced by using, as known raw material monomers, an aromatic dihalide compound and an aromatic dihydroxy compound, and subjecting them to desalting polycondensation in a polymerization solvent along with an alkali metal carbonate, an alkali metal hydrogen carbonate, or an alkali metal hydroxide, which are basic alkali metal compounds capable of forming a phenolate-type salt with the aromatic dihydroxy compound.

Examples of the aromatic dihalide compound include, but is not limited to, 2,6-difluorobenzonitrile, 2,6-dichlorobenzonitrile, 2,4-difluorobenzonitrile, and 2,4-dichlorobenzonitrile.

As the aromatic dihydroxy compound, a compound given as an example of a raw material for the PAEK described above can be used.

In addition, a compound having, per molecule, a halogen group, a hydroxyl group, and an aromatic ring with a nitrile group (-CN) can be subjected to the same polycondensation reaction. Examples of the compound that can be used in this reaction include compounds such as 2-hydroxy-6-fluorobenzonitrile, 2-hydroxy-6-chlorobenzonitrile, 2-hydroxy-4-fluorobenzonitrile, and 2-hydroxy-4-chlorobenzonitrile.

The continuous production apparatuses disclosed in WO 2017/179327 and WO 2018/159220 have three raw material supply lines each. In the present embodiment, the aqueous solution of the alkali metal compound and the raw materials are preferably supplied from at least two supply lines including a line for supplying the aqueous solution of the alkali metal compound and another line for supplying the raw materials.

In the present embodiment, the supply amount of the polymerization solvent, the alkali metal compound, and the raw materials to be supplied into the continuous production apparatus can be appropriately changed depending on factors such as the volume of the continuous production apparatus and the intended production volume.

In the present embodiment, depending on the type of aromatic polyether of interest, with regard to each of the aromatic dihalogen compound, the aromatic dihydroxy compound, and the aromatic compound having a halogen group and a hydroxyl group, one type may be used alone, or two or more types may be used in combination.

In the present embodiment, the molar ratio of hydroxyl groups to halogen groups is an important factor that determines the degree of polymerization. The molar ratio of hydroxyl groups to halogen groups is preferably in a range of hydroxyl groups : halogen groups = 0.8 to 1.2 : 1.2 to 0.8, and is more preferably in a range of hydroxyl groups : halogen groups = 0.9 to 1.1 : 1.1 to 0.9.

In the present embodiment, the number of moles of the aromatic dihydroxy compound per one mole of the aromatic dihalogen compound supplied into the continuous production apparatus is preferably from 0.90 to 1.10, more preferably from 0.92 to 1.08, and even more preferably from 0.94 to 1.06.

In the present embodiment, when the polycondensation reaction is carried out, one or more types of bases having a valence of n (n is an integer of 1 or greater) are blended, and the number of moles of the bases per mole of the aromatic dihydroxy compound may be adjusted so that a total of values obtained by multiplying by n/2 for each type of base is preferably from 0.95 to 1.15, and more preferably from 1.00 to 1.10. For example, the n is 2 when the base is sodium carbonate, and is 1 when the base is sodium hydrogen carbonate or sodium hydroxide.

### [Polymerizing Step]

In the polymerizing step, the reaction mixture is formed by carrying out a polymerization reaction in the polymerization solvent in at least one or more reaction vessels. The polymerization reaction carried out in the continuous production method of the present embodiment is typically a desalting polycondensation reaction through an aromatic nucleophilic substitution reaction.

When the aromatic polyether obtained by the continuous production method of the present embodiment is PAEK or PAEN, the polymerization temperature is preferably greater than 100°C and not greater than 320°C, more preferably from 150°C to 300°C, and even more preferably from 170°C to 280°C. When the aromatic polyether obtained by the continuous production method of the present embodiment is PASF, the polymerization temperature is preferably greater than 100°C and not greater than 290°C, more preferably from 150°C to 270°C, and even more preferably from 170°C to 250°C. The polymerization temperature is the temperature under pressurized conditions.

In addition, the polymerization reaction is carried out at a gage pressure of greater than 0 MPa to not greater than 1.0 MPa, preferably not greater than 0.7 MPa, and more preferably not greater than 0.5 MPa. From perspectives of promoting the polymerization reaction, the pressure of each reaction vessel of the continuous production apparatus is preferably uniform.

From perspectives of being able to obtain a high molecular weight aromatic polyether and suppressing the precipitation of the alkali metal compound, the pH of the reaction mixture in the at least one or more reaction vessels is preferably from 9 to 12.5, more preferably from 9.5 to 12, and even more preferably from 10 to 11.5. The pH can be adjusted by, for example, changing the usage amount of the alkali metal compound, and can be adjusted by adding a strong base such as sodium hydroxide and potassium hydroxide to an aqueous solution of the alkali metal compound.

### (Measurement Method of pH)

Water is added to 1 g of the reaction mixture such that the mixture is diluted to 10 g, after which the pH is measured at 23°C using a pH meter.

In addition, in at least one of the reaction vessels, the reaction mixture includes the aromatic polyether having a weight average molecular weight from 2000 to 50000, and the pH of the reaction mixture in at least one of the at least one reaction vessel is preferably from 9 to 12.5, more preferably from 9.5 to 12, and even more preferably from 10 to 11.5. That is, when the pH of the reaction mixture containing the aromatic polyether in the polymerization reaction is within the range described above, a high molecular weight aromatic polyether is obtained. When the pH is lower than the abovementioned range in all the reaction vessels, the polymerization reaction does not proceed, and when the pH is higher than the abovementioned range, a undesirable side reaction occurs, and a high molecular weight aromatic polyether cannot be obtained.

### (Movement Step)

In the movement step, the reaction mixture is sequentially moved to each reaction vessel. That is, while the polymerization reaction proceeds, the reaction mixture moves sequentially through the plurality of sequentially connected reaction vessels.

### (Other Steps)

The continuous production method of the present embodiment may include other steps in addition to the supply, polymerizing, and movement steps. Examples of other steps include a collection step of collecting the reaction mixture. The supply step, polymerizing step, movement step, and collection step are preferably performed simultaneously.

When collecting the reaction mixture, the reaction mixture is preferably collected in a slurry state by controlling the mass ratio of the raw material monomers to the polymerization solvent. The mass ratio of the monomer/polymerization solvent is ordinarily from 1 to 25 parts by mass, preferably from 3 to 20 parts by mass, and more preferably from 5 to 15 parts by mass, per 100 parts by mass of the polymerization solvent. The polymerization solvent may be supplied from the middle of the polymerization reaction until the reaction mixture is collected, and preferably from after the completion of the polymerization reaction until the reaction mixture is collected, such that the mass ratio of the raw material monomer/polymerization solvent is within the range described above. By controlling the mass ratio of the monomers to the polymerization solvent in the range described above, the problem of solidification of the reaction mixture during the collection of the reaction mixture can be resolved. In addition, the obtained aromatic polyether can be easily washed and the polymerization solvent and the like can be easily collected or recycled.

### [Summary]

The method for continuously producing an aromatic polyether according to the present embodiment includes simultaneously implementing: a supply step of supplying a polymerization solvent, an alkali metal compound, and a raw material into a continuous production apparatus in which a plurality of reaction vessels are sequentially connected; a polymerizing step of forming a reaction mixture by carrying out a polymerization reaction in the polymerization solvent in at least one or more of the reaction vessels; and a movement step of sequentially moving the reaction mixture to each reaction vessel; and supplying the alkali metal compound as an aqueous mixture.

In addition, in the method for continuously producing an aromatic polyether according to the present embodiment, the aqueous mixture containing at least the alkali metal compound is preferably supplied into the continuous production apparatus separately from a mixture containing at least part of the raw material and the polymerization solvent.

In addition, in the method for continuously producing an aromatic polyether according to the present embodiment, the raw material is preferably in the form of a solution in which the raw material is dissolved in the polymerization solvent.

In addition, in the method for continuously producing an aromatic polyether according to the present embodiment, the pH of the reaction mixture in at least one or more of the reaction vessels is preferably from 9 to 12.5.

In addition, in the method for continuously producing an aromatic polyether according to the present embodiment, in at least one of the reaction vessels, the reaction mixture preferably includes the aromatic polyether having a weight average molecular weight from 2000 to 50000, and the pH of the reaction mixture in at least one of the at least one reaction vessel is preferably from 9 to 12.5.

In addition, the method for continuously producing an aromatic polyether according to the present embodiment preferably includes an aromatic dihalogen compound and an aromatic dihydroxy compound as the raw materials.

In addition, the method for continuously producing an aromatic polyether according to the present embodiment preferably includes an alkali metal carbonate in the alkali metal compound.

In addition, in the method for continuously producing an aromatic polyether according to the present embodiment, the aromatic polyether is preferably a polyaryletherketone.

In addition, in the method for continuously producing an aromatic polyether according to the present embodiment, the polyaryletherketone is preferably polyether ether ketone.

In addition, in the method for continuously producing an aromatic polyether according to the present embodiment, the aromatic polyether is preferably an aromatic polysulfone.

In addition, in the method for continuously producing an aromatic polyether according to the present embodiment, the aromatic polysulfone is preferably a polysulfone, a polyphenylsulfone, or a polyethersulfone.

In addition, in the method for continuously producing an aromatic polyether according to the present embodiment, when the aromatic polyether is a polyaryletherketone, an aromatic dihalogen compound and an aromatic dihydroxy compound are preferably contained as raw materials, and the alkali metal compound and the aromatic dihydroxy compound are preferably mixed with water and supplied as the aqueous mixture.

In addition, in the method for continuously producing an aromatic polyether according to the present embodiment, the continuous production apparatus is preferably provided with a housing chamber that houses a plurality of reaction vessels, and preferably, the reaction vessels are sequentially connected, and are in communication with each other through a gas phase in the housing chamber.

Examples are presented below to describe embodiments of the present invention in further detail. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all documents described in the present specification are incorporated by reference.

### Examples

### Example 1: Production of PEEK

A polymerization reaction was carried out using a continuous production apparatus having six reaction vessels formed by partitioning a housing chamber with five partition walls as shown in FIG. 1 of WO 2018/159220. This continuous production apparatus was a reactor made of SUS having an inner diameter of 108 mm and a length of 300 mm with the partition walls being semicircular.

The continuous production apparatus was charged with 950 g of N-methyl-2-pyrrolidone (NMP). Subsequently, while nitrogen gas was flowed at a flow rate of 0.1 NL/min from an upstream side to a downstream side of the fifth partition wall, an external heater installed at a bottom portion of a housing chamber 2 was used to maintain a temperature 1 of a portion delimited by the first partition wall and the second partition wall from the upstream side, that is, the temperature 1 of a second reaction vessel from the upstream side, at 230°C, and to maintain a temperature 2 of a fifth reaction vessel from the upstream side at 260°C, and to maintain a temperature 3 of a sixth reaction vessel from the upstream side at 260°C. In a steady state, a temperature 4 of the first reaction vessel from the upstream side was 190°C, and a temperature 5 of the fourth reaction vessel from the upstream side was 255°C. A solution of NMP and 4,4'-difluorobenzophenone (DFBP) was continuously supplied at a rate of 5.3 g/min, and an aqueous solution of water, hydroquinone (HQ), and sodium carbonate was continuously supplied at a rate of 9.2 g/min, the solutions being supplied through separate supply lines for 6 hours using a constant-flow pump. The ratios of components in each solution were NMP:DFBP (weight ratio) = 1068.96:213.40, DFBP:HQ (molar ratio) = 1.01:1, HQ:sodium carbonate (molar ratio) = 1:1.1, and water:HQ (weight ratio) = 1975.65:106.62.

Simultaneously, using a distillation apparatus connected to the continuous production apparatus, water contained in the raw material and water produced in the reaction were continuously removed from the continuous production apparatus while the pressure was controlled to a gage pressure of 0.3 MPa by a pressure regulating valve. Additionally, carbon dioxide gas produced by the reaction was released to atmosphere through the distillation apparatus and a water storage tank.

Furthermore, NMP at a temperature of 260°C was supplied from the lower part of the sixth reaction vessel at a flow rate of 6.0 g/min, and the reaction mixture was diluted ((DFBP + HQ)/(NMP + DFBP + HQ) = 10 mass% equivalent), and thereby the reaction mixture was collected in a slurry form.

When the inside of the continuous production apparatus was observed after operations were completed, clogging was not observed in the piping of the continuous apparatus, and the presence of the reaction solution to the overflow level of the partition wall was confirmed in all of the reaction vessels.

PEEK, which was the reaction product, was sampled for analysis from the reaction mixture collection line and each reaction vessel. The reaction mixture was added dropwise to five times the amount of water, and the reaction product was precipitated and filtered. The reaction product was then washed with methanol and filtered. The obtained cake was dried in a vacuum at 60°C for 8 hours, and PEEK powder was obtained. The weight average molecular weight of this PEEK powder was measured under the conditions described above using the GPC-104 gel permeation chromatograph (GPC) from Shodex. The weight average molecular weight was 65000 for the PEEK powder sampled from the reaction mixture collection line, 12000 for the PEEK powder sampled from the third reaction vessel, 24000 for the PEEK powder sampled from the fourth reaction vessel, 42000 for the PEEK powder sampled from the fifth reaction vessel, and 62000 for the PEEK powder sampled from the sixth reaction vessel. In addition, the pH of the reaction solution in each reaction vessel was measured at 23°C using the SK-640PH pH meter available from Sato Keiryoki Mfg. Co., Ltd., and was found to be 10.1 in the third reaction vessel, 9.8 in the fourth and fifth reaction vessels, and 9.0 in the sixth reaction vessel. Further, the pH of the reaction mixture sampled from the reaction mixture collection line was 9.7. Note that the weight average molecular weight was determined by the method described above.

### Example 2: Production of PPSU

A continuous production apparatus similar to the apparatus used in Example 1 was charged with 950 g of N-methyl-2-pyrrolidone (NMP). Subsequently, while nitrogen gas was flowed at a flow rate of 0.1 NL/min from an upstream side to a downstream side of the fifth partition wall, an external heater installed at a bottom portion of the housing chamber 2 was used to maintain the temperature 1 of a portion delimited by the first partition wall and the second partition wall from the upstream side, that is, the temperature 1 of the second reaction vessel from the upstream side, at 210°C, and to maintain the temperature 2 of the fifth reaction vessel from the upstream side at 230°C, and to maintain the temperature 3 of the sixth reaction vessel from the upstream side at 230°C. In a steady state, the temperature 4 of the first reaction vessel from the upstream side was 170°C, and the temperature 5 of the fourth reaction vessel from the upstream side was 225°C. A solution of NMP and 4,4'-dichlorodiphenylsulfone (DCDPS) was continuously supplied at a rate of 2.2 g/min, and an aqueous solution of water, NMP, 4,4'-biphenol, sodium hydroxide, and sodium carbonate was continuously supplied at a rate of 6.5 g/min, the solutions being supplied through separate supply lines for 7 hours using a constant-flow pump. The ratios of components in each solution were NMP:DCDPS (weight ratio) = 352.48:201.01, DCDPS:4,4'-biphenol (molar ratio) = 1.01:1, 4,4'-biphenol:sodium hydroxide:sodium carbonate (molar ratio)= 1:1.8:0.15, and water:NMP:4,4'-biphenol (weight ratio) = 1025.90:407.74:129.06.

Simultaneously, using a distillation apparatus connected to the continuous production apparatus, water contained in the raw material and water produced in the reaction were continuously removed from the continuous production apparatus while the pressure was controlled to a gage pressure of 0.12 MPa by a pressure regulating valve. Additionally, carbon dioxide gas produced by the reaction was released to atmosphere through the distillation apparatus and a water storage tank.

In addition, NMP at a temperature of 210°C was supplied from the lower part of the sixth reaction vessel at a flow rate of 6.9 g/min, and the reaction mixture was diluted ((DCDPS + 4,4'-biphenol)/(NMP + DCDPS + 4,4'-biphenol) = 10 mass% equivalent) and collected.

The reaction product was sampled for analysis from the reaction mixture collection line. The reaction mixture was added dropwise to five times the volume of water, the product was precipitated and filtered, and then further washed with methanol and filtered, the obtained cake was dried in a vacuum at 60°C for 8 hours, and PPSU powder was obtained. The PPSU powder had a weight average molecular weight Mw, calibrated with polystyrene and obtained through GPC, of 36000. The weight average molecular weight was 10000 for the PPSU powder sampled from the third reaction vessel, 20000 for the PPSU powder sampled from the fourth reaction vessel, 37000 for the PPSU powder sampled from the fifth reaction vessel, and 39000 for the PPSU powder sampled from the sixth reaction vessel. In addition, the pH of the reaction solution in each reaction vessel was measured at 23°C using the SK-640PH pH meter available from Sato Keiryoki Mfg. Co., Ltd., and was found to be 10.1 in the third reaction vessel, 10.3 in the fourth and fifth reaction vessels, and 9.6 in the sixth reaction vessel. Further, the pH of the reaction mixture sampled from the reaction mixture collection line was 7.8.

### Example 3: Production of PES

A continuous production apparatus similar to the apparatus used in Example 1 was charged with 950 g of N-methyl-2-pyrrolidone (NMP). Subsequently, while nitrogen gas was flowed at a flow rate of 0.1 NL/min from an upstream side to a downstream side of the fifth partition wall, an external heater installed at a bottom portion of the housing chamber 2 was used to maintain the temperature 1 of a portion delimited by the second partition wall and the third partition wall from the upstream side, that is, the temperature 1 of the third reaction vessel from the upstream side, at 200°C, and to maintain the temperature 2 of the fifth reaction vessel from the upstream side at 220°C, and to maintain the temperature 3 of the sixth reaction vessel from the upstream side at 220°C. In the steady state, the temperature 4 of the first reaction vessel from the upstream side was 150°C, and the temperature 5 of the fourth reaction vessel from the upstream side was 215°C. A solution of NMP and 4,4'-dichlorodiphenylsulfone (DCDPS) was continuously supplied at a rate of 3.5 g/min, and an aqueous solution of water, 4,4'-dihydroxydiphenylsulfone (bisphenol S), and sodium hydroxide was continuously supplied at a rate of 6.4 g/min, the solutions being supplied through separate supply lines for 11 hours using a constant-flow pump. The ratios of components in each solution were NMP:DCDPS (weight ratio) = 760.22:201.01, DCDPS:bisphenol S (molar ratio)= 1:1, bisphenol S:sodium hydroxide (molar ratio) = 1:2, and water:bisphenol S (weight ratio) = 1547.23: 175.19.

Simultaneously, using a distillation apparatus connected to the continuous production apparatus, water contained in the raw material and water produced in the reaction were continuously removed from the continuous production apparatus while the pressure was controlled to a gage pressure of 0.1 MPa by a pressure regulating valve. Additionally, carbon dioxide gas produced by the reaction was released to atmosphere through the distillation apparatus and a water storage tank.

The reaction product was collected for analysis from the reaction mixture collection line. The reaction mixture was added dropwise to five times the volume of water, the product was precipitated and filtered, and then further washed with methanol and filtered, the obtained cake was dried in a vacuum at 60°C for 8 hours, and PES powder was obtained. The PES powder had a weight average molecular weight Mw, calibrated with polystyrene and obtained through GPC, of 14000. The weight average molecular weight was 5000 for the PES powder sampled from the third reaction vessel, 5000 for the PES powder sampled from the fourth reaction vessel, 6000 for the PES powder sampled from the fifth reaction vessel, and 14000 for the PES powder sampled from the sixth reaction vessel. In addition, the pH of the reaction solution in each reaction vessel was measured at 23°C using the SK-640PH pH meter available from Sato Keiryoki Mfg. Co., Ltd., and was found to be 11.0 in the third reaction vessel, 11.1 in the fourth reaction vessel, 11.0 in the fifth reaction vessel, and 10.1 in the sixth reaction vessel. Further, the pH of the reaction mixture sampled from the reaction mixture collection line was 10.2.

### Example 4: Production of PPSU

A continuous production apparatus similar to the apparatus used in Example 1 was charged with 950 g of N-methyl-2-pyrrolidone (NMP). Subsequently, while nitrogen gas was flowed at a flow rate of 0.1 NL/min from an upstream side to a downstream side of the fifth partition wall, an external heater installed at a bottom portion of the housing chamber 2 was used to maintain the temperature 1 of a portion delimited by the second partition wall and the third partition wall from the upstream side, that is, the temperature 1 of the third reaction vessel from the upstream side, at 200°C, and to maintain the temperature 2 of the fifth reaction vessel from the upstream side at 210°C, and to maintain the temperature 3 of the sixth reaction vessel from the upstream side at 210°C. In a steady state, the temperature 4 of the first reaction vessel from the upstream side was 170°C, the temperature 5 of the second reaction vessel from the upstream side was 190°C, and the temperature 6 of the fourth reaction vessel from the upstream side was 205°C. A solution of NMP and 4,4'-dichlorodiphenylsulfone (DCDPS) and 4,4'-biphenol was continuously supplied at a rate of 4.3 g/min, and an aqueous solution of water, sodium hydroxide, and sodium carbonate was continuously supplied at a rate of 1.2 g/min, the solutions being supplied through separate supply lines for 7 hours using a constant-flow pump. The ratios of components in each solution were NMP:DCDPS:4,4'-biphenol (weight ratio) = 760.22:129.06:201.01, DCDPS:4,4'-biphenol (molar ratio) = 1.01:1, 4,4'-biphenol:sodium hydroxide:sodium carbonate (molar ratio) = 1:1.8:0.15, and water:sodium hydroxide:sodium carbonate (weight ratio) = 243.69:49.90:11.02.

Simultaneously, using a distillation apparatus connected to the continuous production apparatus, water contained in the raw material and water produced in the reaction were continuously removed from the continuous production apparatus while the pressure was controlled to a gage pressure of 0.06 MPa by a pressure regulating valve. Additionally, carbon dioxide gas produced by the reaction was released to atmosphere through the distillation apparatus and a water storage tank.

In addition, NMP at a temperature of 210°C was supplied from the lower part of the sixth reaction vessel at a flow rate of 6.9 g/min, and the reaction mixture was diluted ((DCDPS + 4,4'-biphenol)/(NMP + DCDPS + 4,4'-biphenol) = 10 mass% equivalent) and collected.

The reaction product was sampled for anlysis from the reaction mixture collection line. The reaction mixture was added dropwise to five times the volume of water, the product was precipitated and filtered, and then further washed with methanol and filtered, the obtained cake was dried in a vacuum at 60°C for 8 hours, and PPSU powder was obtained. The PPSU powder had a weight average molecular weight Mw, calibrated with polystyrene and obtained through GPC, of 11000. The weight average molecular weight was 7000 for the PPSU powder sampled from the third reaction vessel, 10000 for the PPSU powder sampled from the fourth reaction vessel, 13000 for the PPSU powder sampled from the fifth reaction vessel, and 14000 for the PPSU powder sampled from the sixth reaction vessel. In addition, the pH of the reaction solution in each reaction vessel was measured at 23°C using the SK-640PH pH meter available from Sato Keiryoki Mfg. Co., Ltd., and was found to be 10.2 in the third reaction vessel, 10.5 in the fourth and fifth reaction vessels, and 10.0 in the sixth reaction vessel. Further, the pH of the reaction mixture sampled from the reaction mixture collection line was 10.0.

### Comparative Example 1: Production of PEEK

A continuous production apparatus similar to the apparatus used in Example 1 was charged with 950 g of N-methyl-2-pyrrolidone (NMP). Subsequently, while nitrogen gas was flowed at a flow rate of 0.1 NL/min from an upstream side to a downstream side of the fifth partition wall, an external heater installed at a bottom portion of the housing chamber 2 was used to maintain the temperature 1 of a portion delimited by the first partition wall and the second partition wall from the upstream side, that is, the temperature 1 of the second reaction vessel from the upstream side, at 230°C, and to maintain the temperature 2 of the fifth reaction vessel from the upstream side at 260°C, and to maintain the temperature 3 of the sixth reaction vessel from the upstream side at 260°C. In a steady state, a temperature 4 of the first reaction vessel from the upstream side was 190°C, and a temperature 5 of the fourth reaction vessel from the upstream side was 255°C. The temperature 1 at a portion delimited by the second partition wall, that is, the temperature 1 of the second reaction vessel from the upstream side, was maintained at 220°C, the temperature 2 at a portion delimited by the third partition wall and the fourth partition wall, that is, the temperature 2 of the fourth reaction vessel from the upstream side, was maintained at 260°C, and the temperature 3 of a portion delimited by the fifth partition wall from the upstream side and a side wall of the housing chamber 2, that is, the temperature 3 of the sixth reaction vessel from the upstream side, was maintained at 260°C. NMP, 4,4'-difluorobenzophenone (DFBP), hydroquinone (HQ), and potassium carbonate were formed into a single dispersion using constant-flow pumps from each supply line, that is, raw material was continuously supplied from one raw-material supply line at a flow rate of 6.4 g/min (NMP:DFBP (weight ratio) = 711.30:142.00, DFBP:HQ (molar ratio) = 1.01:1, HQ:potassium carbonate (molar ratio) = 1:1.1) while stirring with a stirrer.

Note that before supplied, the potassium carbonate having an average particle size of not less than 95 µm in solution was pulverized (to an average particle size of not greater than 95 µm) into a slurry using a homogenizer at a speed of approximately 10000 rpm/min.

Simultaneously, using a distillation apparatus connected to the continuous production apparatus, water produced in the reaction was continuously removed from the continuous production apparatus while the pressure was controlled to a gage pressure of 0.3 MPa by a pressure regulating valve. Additionally, carbon dioxide gas produced by the reaction was released to atmosphere through the distillation apparatus and a water storage tank.

Furthermore, NMP at a temperature of 260°C was supplied from the lower part of the sixth reaction vessel at a flow rate of 6.0 g/min, and the reaction mixture was diluted ((DFBP + HQ)/(DFBP + HQ + NMP) = 10 mass% equivalent).

Clogging occurred in the supply line 15 minutes after starting the supply of materials. Even after the clog was eliminated, clogging occurred intermittently from 5 minutes to 30 minutes after resuming the supply, and operations could not be continued. Due to the occurrence of clogging 15 minutes after starting the supply, almost no reaction mixture was produced.

## Claims

1. A method for continuously producing an aromatic polyether by:
simultaneously implementing
a supply step of supplying a polymerization solvent, an alkali metal compound, and a raw material into a continuous production apparatus in which a plurality of reaction vessels are sequentially connected,
a polymerizing step of forming a reaction mixture by carrying out a polymerization reaction in the polymerization solvent in at least one or more of the reaction vessels, and
a movement step of sequentially moving the reaction mixture to each reaction vessel; and
supplying the alkali metal compound as an aqueous mixture.

2. The continuous production method according to claim 1, wherein the aqueous mixture comprising at least the alkali metal compound is supplied into the continuous production apparatus separately from a mixture comprising at least part of the raw material and the polymerization solvent.

3. The continuous production method according to claim 1 or 2, wherein the raw material is in the form of a solution in which the raw material is dissolved in the polymerization solvent.

4. The continuous production method according to any one of claims 1 to 3, wherein a pH of the reaction mixture in at least one or more of the reaction vessels is from 9 to 12.5.

5. The continuous production method according to any one of claims 1 to 4, wherein in at least one of the reaction vessels, the reaction mixture comprises the aromatic polyether having a weight average molecular weight from 2000 to 50000, and the pH of the reaction mixture in at least one of the at least one reaction vessel is from 9 to 12.5.

6. The continuous production method according to any one of claims 1 to 5, wherein the raw material comprises an aromatic dihalogen compound and an aromatic dihydroxy compound.

7. The continuous production method according to any one of claims 1 to 6, wherein the alkali metal compound comprises an alkali metal carbonate.

8. The continuous production method according to any one of claims 1 to 7, wherein the aromatic polyether is a polyaryletherketone.

9. The continuous production method according to claim 8, wherein the polyaryletherketone is polyether ether ketone.

10. The continuous production method according to any one of claims 1 to 7, wherein the aromatic polyether is an aromatic polysulfone.

11. The continuous production method according to claim 10, wherein the aromatic polysulfone is a polysulfone, polyphenylsulfone, or polyethersulfone.

12. The continuous production method according to claim 8 or 9, wherein the raw material comprises an aromatic dihalogen compound and an aromatic dihydroxy compound, and the alkali metal compound and the aromatic dihydroxy compound are mixed with water and supplied as the aqueous mixture.

13. The continuous production method according to any one of claims 1 to 12, wherein
the continuous production apparatus is provided with a housing chamber that houses a plurality of reaction vessels;
the reaction vessels are sequentially connected; and
the reaction vessels communicate with each other through a gas phase in the housing chamber.
